# EUROPEAN PATENT SPECIFICATION

(11) **EP 2 730 383 B1**
(45) Date of publication and mention of the grant of the patent: **30.09.2015**
(21) Application number: 11868934.8
(22) Date of filing: 07.07.2011
(51) Int. Cl.: B29C 37/00, B27N 3/04, B27N 5/00

(54) **METHOD FOR MANUFACTURING AN IN-MOLD DECORATIVE FIBER MOLDED ARTICLE**
HERSTELLUNGSVERFAHREN FÜR EINEN DEKORATIVEN HINTERSPRITZTEN FASERGUSSKÖRPER
PROCÉDÉ DE FABRICATION D'UN ARTICLE MOULÉ À FIBRES DÉCORATIVES DANS LE MOULE

(30) Priority: 07.07.2011 JP 2011151146
(43) Date of publication of application: 14.05.2014
(73) Proprietor: Nissha Printing Co., Ltd., Kyoto-shi, Kyoto 604-8551 (JP)
(72) Inventor: TAKENAKA Hiroshi, Kyoto-shi Kyoto 604-8551 (JP)
(74) Representative: Global IP Europe Patentanwaltskanzlei
(86) International application number: PCT/JP2011/065616
(87) International publication number: WO 2013/005331

(56) References cited:
- FR-A- 1 516 215
- FR-A1- 2 947 205
- GB-A- 1 155 064
- JP-A- 5 057 710
- JP-A- 61 035 246
- JP-A- 2011 136 498
- JP-B1- 2 916 136
- JP-B2- 3 407 114

## Description

### TECHNICAL FIELD

The present invention relates to an in-mold decorated fibrous molded object and a method for manufacturing the same. In particular, the present invention relates to an in-mold decorated fibrous molded object capable of being beautifully decorated, and a method for manufacturing the same.

### BACKGROUND ART

As a conventional method for manufacturing a fibrous molded object, there is a method for manufacturing a decorated fibrous molded object, which includes filling a cavity of a heated mold with a mixture serving as a molding material, the mixture being obtained by adding a polymer binding material and water to a main fibrous material and kneading them; and forming a gap of 0.02 to 0.50 mm between parting faces of the mold, and discharging and removing water vapor generated in the cavity from the gap to dry and solidify the molding material, thereby obtaining a fibrous molded object (for example, see Patent Documents 1 and 2).

Because pulp is frequently used as the main fibrous material used for the above-mentioned method, the method for manufacturing a fibrous molded object is also referred to as pulp injection molding (PIM (registered trademark)).

### PRIOR ART DOCUMENTS

### PATENT DOCUMENTS

[Patent Document 1] Japanese Patent No. 2916136
[Patent Document 2] Japanese Patent No. 3084216

### DISCLOSURE OF THE INVENTION

### PROBLEMS TO BE SOLVED BY THE INVENTION

There has been a problem that it is difficult to beautifully decorate the above-mentioned conventional fibrous molded object.

That is, means such as a screen printing method can be used for the fibrous molded object in order to decorate the fibrous molded object. However, the fibrous molded object must have a flat shape, which greatly restricts the application range. The fibrous molded object can be decorated by coloring the molding material. However, the whole fibrous molded object only can be set to a single color, which cannot be said to be beautiful decoration.

Then, it is considered to beautifully decorate a plastic sheet, insert the plastic sheet in a mold for manufacturing a fibrous molded object, and integrally mold the plastic sheet with the fibrous molded object. Such a decorating method makes it possible to form a beautiful pictorial pattern or the like and to integrate the plastic sheet with a surface of a three-dimensionally shaped molded object because the plastic sheet is decorated. Therefore, the decorating method is frequently used to decorate the plastic molded object, and is also referred to as an insert molding method or an in-mold decorating method.

However, because the above-mentioned decorating method uses the plastic sheet, moisture contained in the molding material cannot be well discharged to the outside as water vapor in a drying step in the method for manufacturing a fibrous molded object. This complicates the application of the decorating method to methods for manufacturing a fibrous molded object.

It is also considered to use a nonwoven fabric having good water vapor permeation, in place of the plastic sheet. However, when compared with the method for manufacturing a plastic molded object, the nonwoven fabric is to be heated at a high temperature for a long time in the drying step in the method for manufacturing a fibrous molded object. Therefore, the nonwoven fabric may fuse due to the heat applied in the drying step, which complicates the application of the nonwoven fabric.

The present invention has been made to solve the above-mentioned problem. It is an object of the present invention to provide an in-mold decorated fibrous molded object capable of being beautifully decorated, and a method for manufacturing the same.

### MEANS FOR SOLVING THE PROBLEMS

In order to achieve the above-mentioned object, a first aspect of the present invention is a method for manufacturing an in-mold decorated fibrous molded object. The method includes the steps of forming a pictorial pattern on an easy moldable paper to decorate the easy moldable paper, the easy moldable paper having microcreases formed over the entire surface thereof so that the easy moldable paper has a reduced apparent dimension; inserting the easy moldable paper into a mold; clamping the mold; filling a cavity of the heated mold with a mixture as a molding material, the mixture being obtained by adding a polymer binding material and water to a main fibrous material and kneading them; forming a gap of 0.02 to 0.50 mm between parting faces of the mold, and discharging and removing water vapor generated in the cavity through the gap to dry and solidify the molding material; and opening the mold to obtain a fibrous molded object having a surface integrally molded with the easy moldable paper.

With such a configuration, the easy moldable paper is integrated with the fibrous molded object.

A second aspect of the present invention is a method for manufacturing an in-mold decorated fibrous molded object according to the first aspect, wherein the easy moldable paper, before being inserted into the mold, has a water content set so as to suppress temperature rising in the mold.

With such a configuration, the temperature rising of the easy moldable paper is suppressed during molding.

A third aspect of the present invention is a method for manufacturing an in-mold decorated fibrous molded object according to the second aspect, wherein the water content of the easy moldable paper, before being inserted into the mold, is 5 to 10%.

With such a configuration, the water content of the easy moldable paper, before being inserted into the mold, is optimally set so as to cause neither color migration nor color faint.

A fourth aspect of the present invention is a method for manufacturing an in-mold decorated fibrous molded object according to the first aspect, wherein the easy moldable paper having the pictorial pattern formed thereon is preliminarily molded into a three-dimensional shape so as to be provided along a surface shape of the cavity of the mold.

With such a configuration, the easy moldable paper is accurately provided along the surface of the cavity in the mold.

A fifth aspect of the present invention is a method for manufacturing an in-mold decorated fibrous molded object according to any of the first to third aspects, wherein an unnecessary portion of the easy moldable paper is removed along a circumferential shape of the fibrous molded object after the mold is opened.

With such a configuration, the unnecessary portion is removed, thereby enabling the beautiful in-mold decoration.

A sixth aspect of the present invention is an in-mold decorated fibrous molded object including: a fibrous molded object; and an easy moldable paper laminated on a surface of the fibrous molded object to decorate the easy moldable paper, the easy moldable paper having microcreases formed over the entire surface thereof so that the easy moldable paper has a reduced apparent dimension.

With such a configuration, the in-mold decorated fibrous molded object is wholly made of fibrous material.

A seventh aspect of the present invention is an in-mold decorated fibrous molded object according to the fourth aspect, wherein no step is formed between the surface of the fibrous molded object and the surface of the easy moldable paper.

Such a configuration provides the surface shape of the decorated fibrous molded object with a sense of unity between the fibrous molded object and the easy moldable paper.

### ADVANTAGES OF THE INVENTION

As described above, in the first aspect of the present invention, the easy moldable paper is integrated with the fibrous molded object, water vapor is accurately removed from the mold in a heating-drying step, and the pictorial pattern of the easy moldable paper is not impaired, thereby enabling the in-mold decoration. In addition, since there is less restriction on decorating means, the first aspect enables various expressions.

In the second aspect of the present invention, the water content of the easy moldable paper before being inserted into the mold is particularly set, in addition to the effect of the first aspect. Therefore, during molding, the heat of the mold evaporates moisture of the easy moldable paper to reduce an amount of the moisture, and thus, the ink of the pictorial pattern formed on the easy moldable paper does not adhere to the mold. As a result, color faint and color migration can be prevented.

In the third aspect of the present invention, the effect of the second aspect of the present invention is further enhanced to lead to the optimal water content of the easy moldable paper before being inserted in the mold. Therefore, the beautiful molded object can be achieved having neither color migration nor color faint and having an expected accuracy range as designed.

In the fourth aspect of the present invention, the easy moldable paper may be arranged accurately along the surface of the cavity in the mold, in addition to the effects of the first to third aspects of the present invention. Therefore, the molding material does not go around the rear side, and the in-mold decoration in the three-dimensional shape is more certainly enabled.

In the fifth aspect of the present invention, the unnecessary portion is removed, in addition to the effect of the first aspect of the present invention. Therefore, the fifth aspect enables the in-mold decoration having the beautiful circumferential shape of the molded object.

In the sixth aspect of the present invention, the in-mold decorated fibrous molded object is wholly made of fibrous material and thus has good tactile feeling. In addition, the sixth aspect of the present invention makes separation or the like unnecessary when recycling, and facilitates biological breakdown when discarded.

In the seventh aspect of the present invention, there is a sense of unity between the fibrous molded object and the easy moldable paper, in addition to the effect of the fourth aspect of the present invention. Therefore, the in-mold decorated fibrous molded object does not appear to be made of lamination.

### BRIEF DESCRIPTION OF THE DRAWINGS

FIG. 1 is a sectional view illustrating an example of an easy moldable paper used for the present invention.
FIG. 2 is a photograph illustrating an example of microcreases formed over the entire surface of the easy moldable paper used for the present invention.
FIG. 3 is a sectional view illustrating an example of the present invention.
FIG. 4 is a sectional view illustrating an example of the present invention.
FIG. 5 is a sectional view illustrating an example of the present invention.
FIG. 6 is a perspective view illustrating an example of the present invention.

### EMBODIMENTS OF THE INVENTION

Next, a first embodiment of the present invention will be described with reference to the drawings.

A method for manufacturing an in-mold decorated fibrous molded object 7 of the present invention includes the steps of: forming a pictorial pattern 2 on an easy moldable paper 1, the easy moldable paper 1 having microcreases formed over the entire surface thereof, so that the paper has a reduced apparent dimension; inserting the easy moldable paper 1 into a mold; clamping the mold; filling a cavity of the heated mold with a mixture serving as a molding material 5, the mixture being obtained by adding a polymer binding material and water to a main fibrous material and kneading them; forming a gap of 0.02 to 0.50 mm between parting faces of the mold, and discharging and removing water vapor generated in the cavity from the gap to dry and solidify the molding material 5; and opening the mold to obtain a fibrous molded object 6 having a surface integrally molded with the easy moldable paper 1.

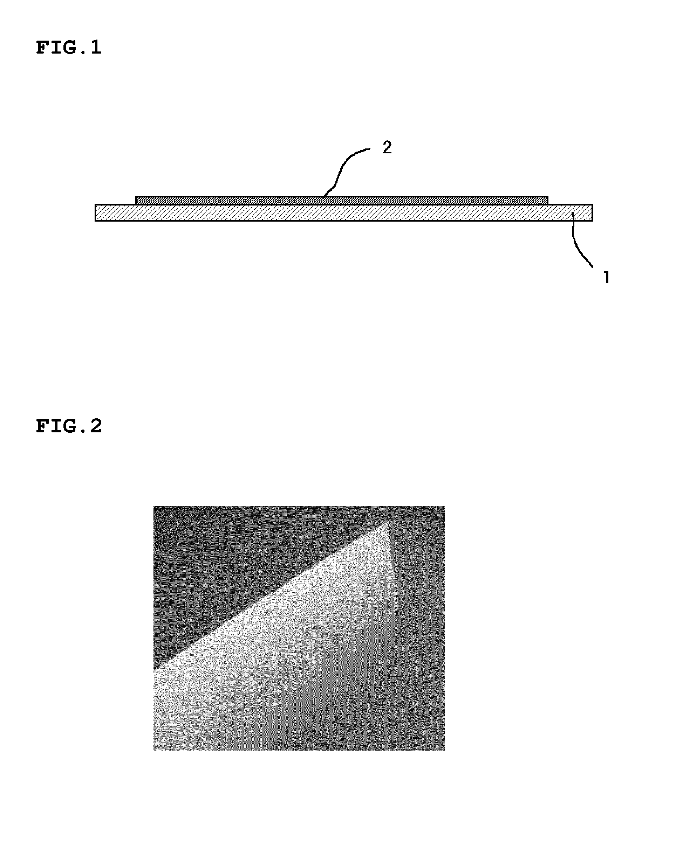

First, a pictorial pattern 2 is formed on an easy moldable paper 1 which has microcreases formed over the entire surface thereof, so that the paper has a reduced apparent dimension (see FIG. 1).

As the easy moldable paper 1, a paper is used which has microcreases formed over the entire surface thereof, so that the paper has a reduced apparent dimension (see Fig. 2). The easy moldable paper 1 with such a configuration has excellent three-dimensional moldability. Therefore, when the easy moldable paper 1 is integrally laminated on a surface of the fibrous molded object 6 having a three-dimensional shape, it can be beautifully laminated without causing wrinkles, breaks, and the like. In a drying step to be performed later, the easy moldable paper 1 has an excellent water vapor permeation property. In addition, heat applied in the drying step causes no deterioration in the paper itself.

More specifically, a paper obtained by the following manufacturing method may be used as the easy moldable paper 1. That is, a wet paper in which moisture contained therein is adjusted to 20 to 50% is passed through a shrink imparting apparatus to shrink a web. The shrink imparting apparatus includes a metal roll having grooves provided in a circumferential direction at a constant interval in a width direction of a roll and a smooth rubber roll. In the apparatus, the press roll having a rubber roll rotates with a circumferential velocity slower than that of the metal roll. Then, the wet paper is dried after the processing, and thereby obtaining the easy moldable paper 1, in which a breaking elongation in a lengthwise direction and a transverse direction is 15 to 50% (see Japanese Patent No. 3407114 or the like).

Natural pulp serving as a raw material for the easy moldable paper 1 is not particularly limited as long as it is a usual papermaking raw material, which may be, for example, wood pulp using needle-leaved trees or broad-leaved trees, non-wood pulp such as kenaf or bagasse, recycled pulp, or the like. In view of general versatility or the like, wood pulp is preferably used. A beating degree of the wood pulp is preferably CSF 200 to 450 ml in view of elongation characteristic, strength, paper property and the like. The beating degree is more preferably CSF 250 to 400 ml. A composition ratio of the natural pulp is preferably 50% or more.

The pictorial pattern 2 is formed on the easy moldable paper 1 having such a configuration through, for example, various printing methods, so as to decorate the easy moldable paper 1. Means such as a relief printing method, an intaglio printing method, a planographic printing method, and a mimeograph printing method may be used as the printing method. The pictorial pattern 2 may be formed by means without using a plate, such as an ink jet printing method. A dye, a pigment, or the like may be used as a coloring material for an ink forming the pictorial pattern 2. The pictorial pattern 2 may be laminated as an ink layer on the easy moldable paper 1. The pictorial pattern 2 may be formed by impregnating a fiber constituting the easy moldable paper 1 with an ink.

If the coloring material and the binder for the ink which are derived from a natural material and are biodegradable is utilized, it becomes easier to implement environmental measures when the in-mold decorated fibrous molded object 7 is recycled or discarded.

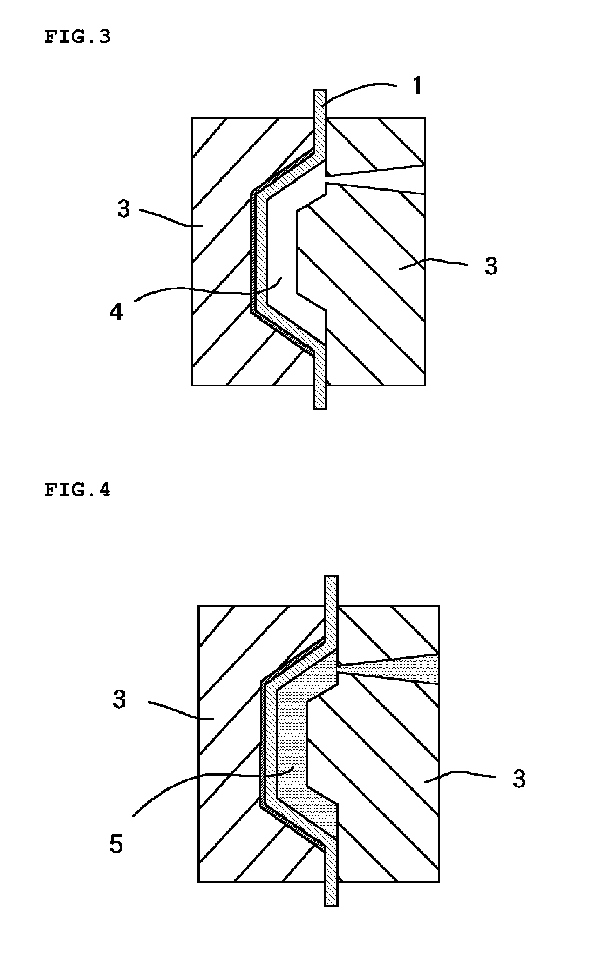

Then, the easy moldable paper 1 is inserted into the mold 3, and the mold is then clamped (see Fig. 3).

As the mold 3, a mold is used in which the molding material 5 used for obtaining the fibrous molded object 6 can be injected, and which is used for a pulp injection molding method for discharging and removing the moisture contained in the molding material 5 as water vapor by heat, so as to dry the molding material 5 (see Japanese Patent Nos. 2916136 and 3084216).

In order to allow the easy moldable paper 1 to be positively provided along a surface of the cavity of the mold 3, the easy moldable paper 1 may be three-dimensionally molded into the shape of the surface of the cavity (preliminarily molded). The three-dimensional molding may be performed by known means such as a pressing method. The easy moldable paper 1 provided along the surface of the cavity can prevent the molding material 5 from going around a surface finally positioned on the uppermost surface of the easy moldable paper 1 (also referred to as "going around the back") in a filling step of the molding material 5 to be performed later.

Then, the cavity 4 of the heated mold 3 is filled with the molding material 5, which is the mixture obtained by adding the polymer binding material and water to the main fibrous material and kneading them (see Fig. 4).

Usual papermaking raw materials, for example, wood pulp using needle-leaved trees and broad-leaved trees, non-wood pulp such as kenaf and bagasse, and recycled pulp, can be used as the main fibrous material. Natural fibers such as paper waste, waste paper, cotton cloth, hemp, chaff, Tofu lees, and wood powder; a glass fiber; and a fiber made of a synthetic resin such as nylon, polyacryl, or polyester can also be used. Paper fibers such as paper waste and waste paper are particularly preferable. Because a fiber length of such a paper fiber is short, it is effective to combine other fiber of 5% to 40%, and preferably 5% to 20% in the case of the molded object requiring a high strength. A length of the combined fiber is preferably 3 mm to 10 mm.

It is preferable that the polymer binding material is soluble in water or forms a low-viscosity emulsion when being kneaded with the main fibrous material, and that it facilitates the mold release of the molded object in a solid state when water is evaporated and removed. Water-soluble polymer materials such as starch, polyvinyl alcohol, polyacrylic acid, polyacrylamide, polyitaconic acid, carboxymethylcellulose, and a copolymer thereof can be used. In addition, among thermosetting resins which are originally water-insoluble, such as a urea resin, a melamine resin, a phenol resin, and unsaturated polyester, those that can produce an aqueous solution or emulsion as its initial condensate can be used.

A mixture obtained by adding the above-mentioned polymer binding material and water to the above-mentioned main fibrous material and kneading them is used as the molding material 5. As the composition ratio of the molding material 5, for example, the blending ratio of the main fibrous material is 50% to 90%, and preferably 60% to 80%; the composition ratio of the polymer binding material is 10% to 50%, and preferably 20% to 40%; and the composition ratio of water is 20% to 80%, and preferably 30% to 70%.

The mold 3 may be heated, for example, so that a temperature of a mold wall surface forming the cavity 4 is set to 120°C to 240°C, and preferably 160°C to 220°C.

Then, the gap of 0.02 to 0.50 mm between the parting faces of the mold 3 is formed, and the water vapor generated in the cavity 4 is discharged and removed through the gap, to dry and solidify the molding material 5.

The cavity 4 of the heated mold 3 is filled with the molding material 5. Consequently, the water added during kneading is instantaneously evaporated, a vapor pressure of which foams the main fibrous material. At the same time, due to the vapor pressure, the main fibrous material fills the cavity 4, and presses against a wall surface thereof. Hence, the molding material 5 is molded with good transcription even in a molded object having a great change in a wall thickness. The evaporated water vapor is discharged and removed through the gap in the mold 3 to promptly solidify the molded object. Because the easy moldable paper 1 has excellent permeability, it does not hinder the discharge of the water vapor in the drying step. Because the easy moldable paper 1 is made of a material having excellent heat resistance, such as pulp, heat in the drying step causes no deterioration such as fusion or yellowing.

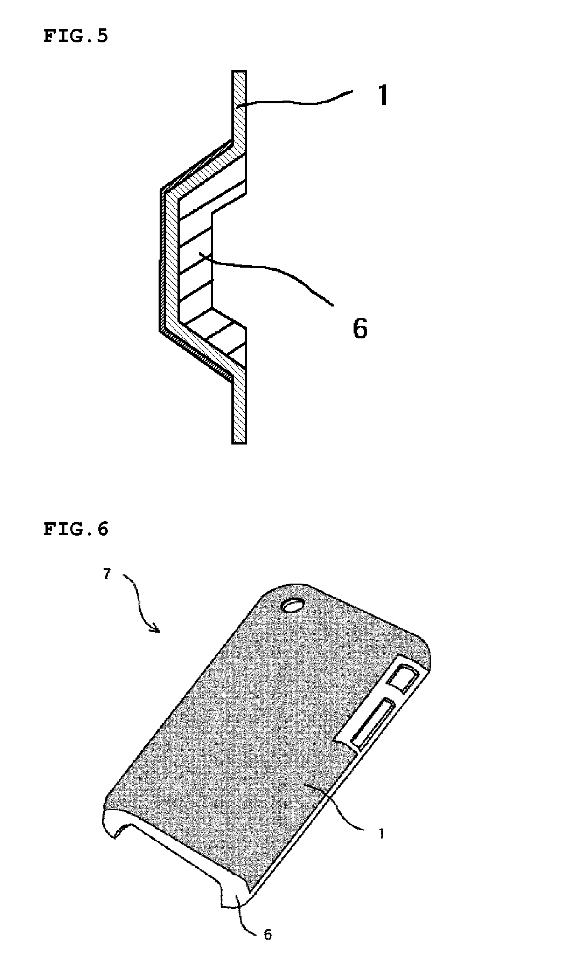

Then, the mold is opened, and the in-mold decorated fibrous molded object 7 in which the easy moldable paper 1 is integrally molded with the surface of the fibrous molded object 6 can be obtained (see Fig. 5).

In the above-mentioned in-mold decorated fibrous molded object 7, the ink of the pictorial pattern 2 formed on the easy moldable paper 1 may be partially transferred into the mold 3 during molding, to generate faint in the pictorial pattern 2 formed on the surface of the in-mold decorated fibrous molded object 7 (referred to as "color faint"). Thereafter, the mold 3 to which the ink of the above-mentioned pictorial pattern 2 is transferred is used for molding, and the ink of the transferred pictorial pattern 3 may be retransferred to the surface of an in-mold decorated fibrous molded object 7 molded (referred to as "color migration").

When the color faint and the color migration occur, it is also useful to set the water content of the easy moldable paper 1 so that the temperature rising of the easy moldable paper 1 caused by the heat of the mold 3 is suppressed during molding. This is because the color faint and the color migration are caused by, when the water content of the easy moldable paper 1 is low, the temperature rising of the easy moldable paper 1 in the mold 3, the temperature rising of the ink of the pictorial pattern 2 formed on the easy moldable paper 1, and the transference of the ink into the mold 3. That is, when the water content is a predetermined value or more, the temperature rising of the easy moldable paper 1 is suppressed in the molded object, thereby enabling the prevention of the color migration into the mold 3.

For example, the water content can be adjusted by preserving the easy moldable paper for a predetermined time in a chamber that enables humidity conditioning before being inserted in the mold 3.

The water content of the easy moldable paper 1 also has an influence on the shape of the easy moldable paper 1. That is, because the easy moldable paper 1 has good elasticity, it is easily elongated and contracted depending on a change in the water content, which has a great influence on position adjustment during molding.

Then, preferably, it is more effective to set the water content of the easy moldable paper 1 to 5 to 10%. Specifically, when the water content deviates from the range, the following problem occurs. That is, when the water content exceeds the upper limit, the easy moldable paper 1 is elongated by the moisture, which deteriorates the position adjustment accuracy of the easy moldable paper 1. When the water content is less than the lower limit, the easy moldable paper 1 is contracted, which deteriorates the position adjustment accuracy of the easy moldable paper 1. Furthermore, the color migration and the color faint occur during molding.

The water content of the easy moldable paper 1 in the present invention means the following. That is, the water content means a value representing the ratio of the weight of the moisture contained in the easy moldable paper 1 to the total weight of the easy moldable paper 1 containing the moisture, by percentage. The water content of the easy moldable paper 1 can be measured by a moisture meter. For example, HK-300 series or the like manufactured by Kett Electric Laboratory can be used.

Finally, the unnecessary region of the easy moldable paper 1 formed around the fibrous molded object 6 is removed by means such as a pressing method or a Thompson method, if needed. As a result, the beautiful in-mold decorated fibrous molded object 7 can be obtained (see Fig. 6).

The in-mold decorated fibrous molded object 7 thus obtained has a flat surface having an excellent sense of unity without having any steps between a region of the fibrous molded object 6 in contact with the cavity surface and a region of the easy moldable paper 1 in contact with the cavity surface. Because the fibrous molded object 6 and the easy moldable paper 1 are firmly connected by a hydrogen bond, they can be integrated without using an adhesive or the like. Both the easy moldable paper 1 and the fibrous molded object 6 are made of a fibrous material such as pulp, and have uniquely soft tactile impression. Because the easy moldable paper 1 and the fibrous molded object 6 are made of a fibrous material such as pulp, they are environmentally friendly products that can be extremely easily treated during recycling and discarding.

### [Examples]

### <<Example 1>>

A pictorial pattern was formed on one surface of an easy moldable paper (manufactured by Cartiere Cariolaro) made of pulp 100% and having microcreases formed over the entire surface of the paper using an ink-jet printer. This easy moldable paper was pressed into a shape of a molded object, and molded into a three-dimensional shape along a cavity surface of a mold.

Hemp and paper mulberry were used as a main fibrous material and starch was used as a polymer binding material, water was added to them, and all of them were kneaded to obtain a molding material.

The above-mentioned easy moldable paper was fixed to a cavity surface of a pulp injection mold heated to 155 to 170°C, and the mold was clamped and filled with the above-mentioned molding material. Then, a gap of 0.20 mm was formed between parting faces of the mold, and water vapor was discharged and removed for 1 to 2 minutes to dry and solidify the molding material.

Then, the mold was opened to obtain a fibrous molded object integrated with the easy moldable paper. A circumferential shape or the like of the easy moldable paper was punched and removed using a Thomson die to obtain an in-mold decorated fibrous molded object.

The in-mold decorated fibrous molded object thus obtained had a beautifully decorated three-dimensional shape. The easy moldable paper had neither creases nor breaks, and was firmly integrated with the fibrous molded object. The joined portion had no step, and was beautiful.

### «Example 2»

A pictorial pattern was formed on one surface of an easy moldable paper (manufactured by Cartiere Cariolaro) made of pulp 100% and having microcreases formed over the entire surface of the paper using offset printing. Then, this easy moldable paper was rested in a chamber set to have a chamber temperature of 25°C and a humidity of 50% for 5 hours, so as to set a water content of the easy moldable paper to 10%. Then, the easy moldable paper was pressed into a shape of a molded object, and molded into a three-dimensional shape along a cavity surface of a mold.

Hemp and paper mulberry were used as a main fibrous material and starch was used as a polymer binding material, water was added to them, and all of them were kneaded to obtain a molding material.

The above-mentioned easy moldable paper was fixed to a cavity surface of a pulp injection mold heated to 155 to 170°C, and the mold was clamped and filled with the above-mentioned molding material. Then, a gap of 0.20 mm was formed between parting faces of the mold, and water vapor was discharged and removed for 1 minute to dry and solidify the molding material.

Then, the mold was opened to obtain a fibrous molded object integrated with the easy moldable paper. A circumferential shape or the like of the easy moldable paper was punched and removed using a Thomson die to obtain an in-mold decorated fibrous molded object.

The above-mentioned step was repeated twice to obtain two in-mold decorated fibrous molded objects.

A surface of the first in-mold decorated fibrous molded object thus obtained had a beautiful pattern having no color faint. A surface of the second in-mold decorated fibrous molded object also had no color migration, and was beautiful.

### <<Comparative Example 1>>

A pictorial pattern was formed on one surface of an easy moldable paper (manufactured by Cartiere Cariolaro) made of pulp 100% and having microcreases formed over the entire surface of the paper using an offset printing machine. Then, this easy moldable paper was rested in a chamber set to have a chamber temperature of 15°C and a humidity of 29% for 5 hours, so as to set a water content of the easy moldable paper to 3%. Then, the easy moldable paper was pressed into a shape of a molded object, and molded into a three-dimensional shape along a cavity surface of a mold.

Hemp and paper mulberry were used as a main fibrous material and starch was used as a polymer binding material, water was added to them, and all of them were kneaded to obtain a molding material.

The above-mentioned easy moldable paper was fixed to a cavity surface of a pulp injection mold heated to 155 to 170°C, and the mold was clamped and filled with the above-mentioned molding material. Then, a gap of 0.20 mm was formed between parting faces of the mold, and water vapor was discharged and removed for 1 minute to dry and solidify the molding material.

Then, the mold was opened to obtain a fibrous molded object integrated with the easy moldable paper. A circumferential shape or the like of the easy moldable paper was punched and removed using a Thomson die to obtain an in-mold decorated fibrous molded object.

The above-mentioned step was repeated twice to obtain two in-mold decorated fibrous molded objects.

A surface of the first in-mold decorated fibrous molded object thus obtained had a pattern having color faint. The ink of the pattern of the first in-mold decorated fibrous molded object transferred to the mold, and was retransferred to a surface of the second in-mold decorated fibrous molded object in the second molding, hence color migration occurred. Because the easy moldable paper was contracted in the first and second in-mold decorated fibrous molded objects, the in-mold decorated fibrous molded object had deteriorated position adjustment accuracy.

### INDUSTRIAL APPLICABILITY

The present invention relates to an in-mold decorated fibrous molded object and a method for manufacturing the same. In particular, the present invention relates to an in-mold decorated fibrous molded object capable of being beautifully decorated, and a method for manufacturing the same.

### DESCRIPTION OF SYMBOLS

- 1:: Easy moldable paper
- 2:: Pictorial pattern
- 3:: Mold
- 4:: Cavity
- 5:: Molding material
- 6:: Fibrous molded object
- 7:: In-mold decorated fibrous molded object

## Claims

1. A method for manufacturing an in-mold decorated fibrous molded object comprising the steps of:
forming a pictorial pattern on an easy moldable paper to decorate the easy moldable paper, the easy moldable paper having microcreases formed over an entire surface thereof so that the easy moldable paper has a reduced apparent dimension;
inserting the easy moldable paper into a mold;
clamping the mold;
filling a cavity of the heated mold with a mixture as a molding material, the mixture being obtained by adding a polymer binding material and water to a main fibrous material and kneading them;
forming a gap of 0.02 to 0.50 mm between parting faces of the mold, and discharging and removing water vapor generated in the cavity through the gap to dry and solidify the molding material; and
opening the mold to obtain a fibrous molded object having a surface integrally molded with the easy moldable paper.

2. The method for manufacturing an in-mold decorated fibrous molded object according to claim 1, wherein the easy moldable paper, before being inserted into the mold, has a water content set so as to suppress temperature rising in the mold, and
the water content of the easy moldable paper, before being inserted into the mold, is 5 to 10%.

3. The method for manufacturing an in-mold decorated fibrous molded object according to any of claims 1 to 2, wherein the easy moldable paper having the pictorial pattern formed thereon is preliminarily molded into a three-dimensional shape so as to be provided along a surface shape of the cavity of the mold.

4. The method for manufacturing an in-mold decorated fibrous molded object according to any of claims 1 to 2, wherein an unnecessary portion of the easy moldable paper is removed along a circumferential shape of the fibrous molded object after the mold is opened.

## Patentansprüche

1. Verfahren zur Herstellung eines in einer Form dekorierten, faserigen, geformten Gegenstands, wobei das Verfahren die folgenden Schritte umfasst:
Bilden eines Bildmusters auf einem leicht formbaren Papier, um das leicht formbare Papier zu dekorieren, wobei auf dem leicht formbaren Papier Mikrofalten über einer gesamten Oberfläche davon ausgebildet sind, so dass das leicht formbar Papier eine verringerte scheinbare Abmessung hat;
Einführen des leicht formbaren Papiers in eine Form;
Spannen der Form;
Füllen eines Hohlraums der erhitzten Form mit einer Mischung als Formmasse, wobei die Mischung durch Zugabe eines polymeren Bindemittels und Wasser zu einem Hauptfasermaterial und durch Kneten derselben erhalten wird;
Bilden einer Lücke von 0,02 bis 0,50 mm zwischen Trennflächen der Form und Ablassen und Entfernen von Wasserdampf, der in dem Hohlraum gebildet wird, durch den Spalt, um das Formmaterial zu trocknen und zu verfestigen; und
Öffnen der Form, um einen faserigen Formkörper zu erhalten, dessen Oberfläche mit dem leicht formbaren Papier in einem Stück geformt ist.

2. Verfahren zur Herstellung eines in einer Form dekorierten, faserigen, geformten Gegenstands nach Anspruch 1, wobei das leicht formbare Papier vor dem Einlegen in die Form einen Wassergehalt aufweist, der so angepasst ist, um eine Temperaturanstieg in der Form zu verhindern, und
wobei der Wassergehalt des leicht formbaren Papiers vor dem Einlegen in die Form 5 bis 10 % beträgt.

3. Verfahren zur Herstellung eines in einer Form dekorierten, faserigen, geformten Gegenstands nach einem der Ansprüche 1 bis 2, wobei das leicht formbare Papier mit einem darauf gebildeten bildlichen Muster vorab in eine dreidimensionale Form geformt wird, so dass es entlang einer Oberflächenform des Hohlraums der Form vorgesehen ist.

4. Verfahren zur Herstellung eines in einer Form dekorierten, faserigen, geformten Gegenstands nach einem der Ansprüche 1 bis 2, wobei ein unnötiger Abschnitt des leicht formbaren Papiers entlang einer Umfangsform des faserigen Formkörpers entfernt wird, nachdem die Form geöffnet wird.

## Revendications

1. Procédé de fabrication d'un objet moulé fibreux décoré dans le moule comprenant les étapes consistant à :
former un motif pictural sur un papier facilement moulable pour décorer le papier facilement moulable, le papier facilement moulable possédant des microplis formés sur une surface entière de celui-ci, de sorte que le papier facilement moulable possède une dimension apparente réduite ;
insérer le papier facilement moulable dans un moule ;
serrer le moule ;
remplir une cavité du moule chauffé avec un mélange en guise de matériau de moulage, le mélange étant obtenu en ajoutant un matériau de liaison polymère et de l'eau à un matériau fibreux principal et en les malaxant ;
former un écartement de 0,02 à 0,50 mm entre les faces de séparation du moule et évacuer et éliminer la vapeur d'eau générée dans la cavité à travers l'écartement pour sécher et solidifier le matériau de moulage ; et
ouvrir le moule pour obtenir un objet moulé fibreux possédant une surface moulée de façon solidaire avec le papier facilement moulable.

2. Procédé de fabrication d'un objet moulé fibreux décoré dans le moule selon la revendication 1, dans lequel le papier facilement moulable, avant d'être inséré dans le moule, possède une teneur en eau définie de façon à supprimer l'augmentation de température dans le moule et
la teneur en eau du papier facilement moulable, avant d'être inséré dans le moule, va de 5 à 10 %.

3. Procédé de fabrication d'un objet moulé fibreux décoré dans le moule selon l'une quelconque des revendications 1 à 2, dans lequel le papier facilement moulable comportant le motif pictural formé dessus est préalablement moulé en une forme tridimensionnelle, de façon à être fourni le long d'une forme de surface de la cavité du moule.

4. Procédé de fabrication d'un objet moulé fibreux décoré dans le moule selon l'une quelconque des revendications 1 à 2, dans lequel une partie inutile du papier facilement moulable est retirée le long d'une forme circonférentielle de l'objet moulé fibreux après ouverture du moule.
